Europäisches Patentamt

European Patent Office

Office européen des brevets

(11) Numéro de publication: **0 329 537 B1**

## FASCICULE DE BREVET EUROPEEN

(45) Date de publication de fascicule du brevet: **08.09.93**  (51) Int. Cl.5: **H04L  27/18**

(21) Numéro de dépôt: **89400382.1**

(22) Date de dépôt: **10.02.89**

(54) **Système de transmission à modulation MSK et détection différentiellement cohérente.**

(30) Priorité: **19.02.88 FR 8802016**

(43) Date de publication de la demande:
**23.08.89 Bulletin  89/34**

(45) Mention de la délivrance du brevet:
**08.09.93 Bulletin  93/36**

(84) Etats contractants désignés:
**DE GB**

(56) Documents cités:
**US-A- 3 253 223**
**US-A- 4 547 888**

**IEEE INTERNATIONAL CONFERENCE ON
COMMUNICATIONS, Denver, Colorado, 14-18
juin 1981, vol. 1, pages 2.4.1-2.4.5, IEEE, New
York, US; P. GALKO et al.: "On a class of
generalized MSK"**

**PHILIPS JOURNAL OF RESEARCH, vol. 37, no.
4, 1982, pages 165-177, Philips, Eindhoven,
NL; K.S. CHUNG et al.: "Generalized tamed
frequency modulation"**

**1985 IEEE MILITARY COMMUNICATIONS
CONFERENCE, Boston, MA, 20-23 octobre
1985, "The electronic battle: A new era in**

**millitary communications", vol. 1, pages
11.5.1-11.5.6, New York, US; C. RYAN:
"Modem design using continuous phase
modulation with coding"**

(73) Titulaire: **FRANCE TELECOM
6, Place d'Alleray
F-75015 Paris(FR)**

(72) Inventeur: **Kawas Kaleh, Ghassan
5, rue Leredde
F-75013 Paris(FR)**

(74) Mandataire: **Lapoux, Roland
Martinet & Lapoux BP 405
F-78055 Saint Ouentin en Yvelines Cédex
(FR)**

## Description

La présente invention concerne de manière générale la modulation à phase continue. Plus particulièrement, l'invention concerne un système de transmission à modulation binaire et à détection différentiellement cohérente.

La détection différentiellement cohérente d'un signal à phase continue est une solution particulièrement intéressante dans des situations où la récupération de la porteuse est difficile, en raison de la simplicité du récepteur qui en découle et de ses performances. Les performances obtenues pour ce type de détection ne présente qu'une faible dégradation par rapport aux performances obtenues avec une détection cohérente nécessitant un récepteur de complexité accrue.

Par ailleurs, la modulation à phase continue d'indice 0,5 connue par l'homme du métier sous l'appellation de modulation MSK (Minimum Shift keying) présente l'avantage d'un faible encombrement spectral du signal modulé notamment par rapport à la modulation à quatre états de phase (PSK).

Ces deux raisons, entre autres, font que la modulaton MSK à détection différentiellement cohérente est envisagée pour être utilisée notamment pour des liaisons de transmission numériques entre des terminaux radio mobiles dans le projet d'un système de télécommunications par satellite (MSAT) pour terminaux mobiles.

Dans ce contexte, il est souhaitable de fournir de nouveaux équipements émetteur/récepteur présentant des performances accrues par rapport aux équipements émetteur/récepteur connus.

M.K. SIMON et C.C. WANG décrivent dans l'article "Differential Detection of Gaussian MSK in a Mobile Radio Environment", IEEE Transactions on Vehicular Technology, Vol. VT-33, N° 4, November 1987, un système de transmission à modulation GMSK (Gaussian MSK) et à détection différentiellement cohérente utilisant dans un récepteur un filtre de réception à réponse impulsionnelle d'allure gaussienne dans lequel un message composé d'une suite de symboles à transmettre de l'émetteur vers le récepteur est codé différentiellement dans l'émetteur en une suite de symboles codés de telle manière qu'un symbole codé de rang k dans la suite dépend du symbole correspondant de même rang du message et du symbole codé de rang k - 2. Un retard de durée 2T, où T est la période de rythme à laquelle sont délivrés les symboles, est prévu dans le récepteur pour retarder un signal codé reçu portant la suite de symboles codés. Le signal reçu et le signal reçu retardé sont multipliés afin de déduire par filtrage passe-bas du produit obtenu un signal dont des échantillons à des instants kT sont comparés à un seuil d'amplitude non nul afin de décider des valeurs à attribuer à chacun des symboles du message.

Ce système de transmission à modulation GMSK apporte une diminution de la probabilité d'erreur de décision sur les symboles reçus par rapport à d'autres équipements connus, une meilleure ouverture du diagramme de l'oeil étant obtenue à la suite du codage différentiel effectué selon lequel un $k^{\text{ième}}$ symbole codé dépend du $(k-2)^{\text{ième}}$ symbole codé et non du $(k-1)^{\text{ième}}$ symbole codé comme cela est classique. Toutefois, dans ce système, l'interférence entre symboles inhérente à la modulation MSK n'est pas éliminée des échantillons du signal reçu. Une diminution plus importante de la probabilité d'erreur de décision peut être obtenue par un système de transmission dans lequel le bruit d'interférence entre symboles est éliminé des échantillons du signal reçu.

Le US-A-4547888 décrit un filtre égaliseur conçu pour un démodulateur mettant en oeuvre une démodulation de type cohérente. Dans un tel cas, la phase de la porteuse de démodulation est asservie à la phase de la porteuse associée au signal reçu. Le démodulateur comprend alors un organe de décision qui associe à chaque symbole un état choisi parmi un ensemble d'états possibles. Compte tenu de l'asservissement de la phase de la porteuse, les coefficients du filtre égaliseur sont modifiés dynamiquement à partir des symboles et états associés respectifs. Un déphasage de la porteuse de démodulation peut amplifier les résultats négatifs du phénomène d'interférence intersymbole. La phase de la porteuse doit donc être prise en compte dans l'élaboration des coefficients du filtre égaliseur.

L'invention vise à remédier aux interférences intersymboles dans des démodulateurs de type non cohérent (détection différentiellement cohérente) afin d'aboutir à un système de transmission performant particulièrement à des débits élevés comparativement aux techniques de démodulation cohérente.

A cette fin un système de transmission à modulation à phase continue de type MSK comprenant un équipement émetteur et un équipement récepteur de type différentiellement cohérent est tel que défini dans la revendication 1.

Lesdits moyens supplémentaires de filtrage sont constitués d'un égaliseur.

L'entier M est un entier impair afin de simplifier la structure d'un circuit de décision inclus dans l'équipement récepteur. Les calculs théoriques montrent que la probabilité d'erreur de décision est d'autant plus faible que l'entier M est grand. Néanmoins, la quasi-totalité de la diminution possible de la probabilité d'erreur de décision par augmentation de l'entier M est obtenue pour M = 3.

EP 0 329 537 B1

Dans le système de transmission selon l'invention, pour une même probabilité d'erreur de décision, le rapport signal/bruit requis pour le signal modulé reçu dans l'équipement récepteur est réduit d'environ 1,5 dB par rapport à celui requis dans le système de transmission divulgué par M.K. SIMON et C.C. WANG.

D'autres avantages et caractéristiques de l'invention apparaîtront à la lecture de la description suivante de plusieurs réalisations du système de transmission selon l'invention en référence aux dessins annexés correspondants, dans lesquels :

- la Fig. 1 montre sous une forme schématique simplifiée la structure générale du système de transmission selon l'invention ;
- la Fig. 2 représente un égaliseur analogique ou numérique inclus dans un récepteur du système afin d'éliminer l'interférence entre symboles;
- la Fig. 3 montre une première réalisation du système de transmission comprenant un récepteur à filtres de réception en bande de base ;
- la Fig. 4 montre un récepteur du type récepteur de HILBERT et à filtre de réception passe-bande inclus dans une seconde réalisation du système ;
- la Fig. 5 montre un récepteur de structure simplifiée de même type que le récepteur de la Fig. 5 découlant du choix d'une fréquence porteuse, d'une fréquence de rythme des symboles du message, et de l'entier M tel que leur produit soit entier ; et
- la Fig. 6 montre un émetteur à modulateur MSK angulaire inclus dans un système de transmission selon l'invention.

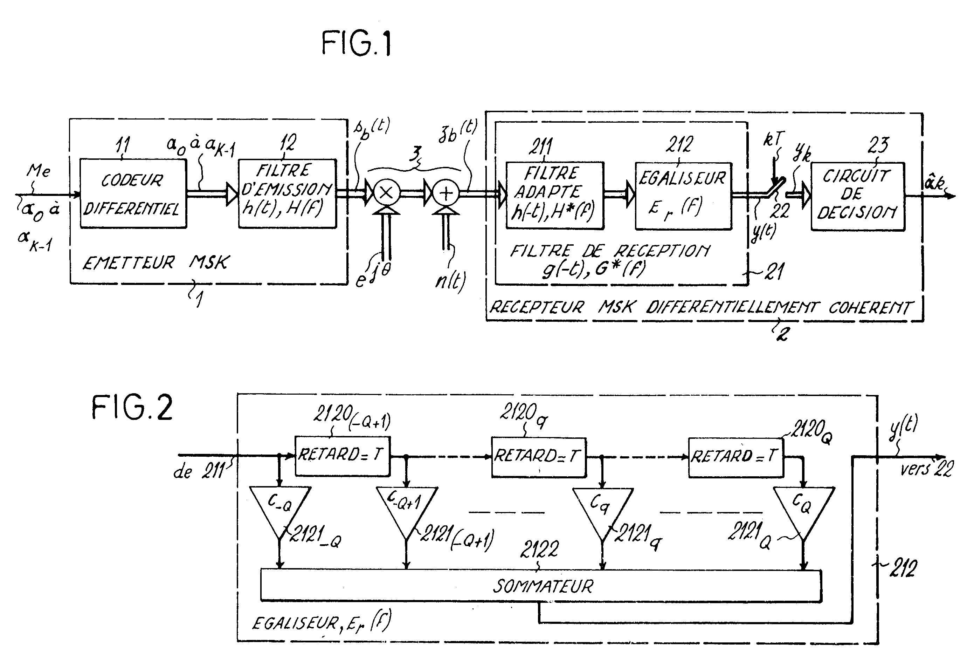

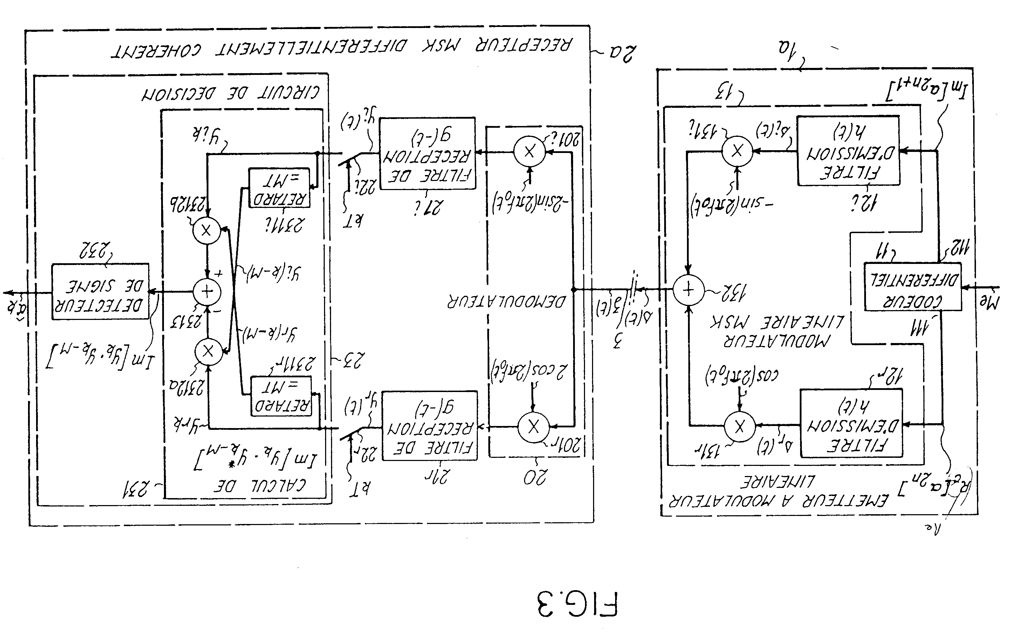

Afin de faciliter la compréhension du fonctionnement des réalisations pratiques du système de transmission selon l'invention, réalisations décrites en référence aux Figs. 3 à 5, ledit système est d'abord décrit, en référence à la Fig. 1, pour une transmission en bande de base et sous une forme schématique simplifiée correspondant à un modèle complexe d'un système équivalent en bande de base. Dans un espace complexe, la multiplication d'un complexe par j et -j correspond respectivement à des rotations de phase de $+\pi/2$ et $-\pi/2$. De plus, un signal MSK étant constitué par la somme de deux porteuses, $\cos(2\pi f_0 t)$ et $-\sin(2\pi f_0 t)$, déphasées de $-\pi/2$ et modulées respectivement par des premier et second signaux codés différentiellement en fonction de l'information à transmettre, un système de transmission MSK peut être représenté sous la forme d'un système à 2 voies de transmission, une première voie "réelle" modulant la porteuse $\cos(2\pi f_0 t)$ et une seconde voie "imaginaire" modulant la porteuse $-\sin(2\pi f_0 t)$. Le signal MSK transmis sur un support de transmission vers un récepteur est altéré par la transmission. Après démodulation dans ledit récepteur, les premier et second signaux codés différentiellement reçus contiennent chacun une partie de l'information portée initialement entièrement par l'autre signal codé. A un symbole transmis véhiculé par exemple par le premier signal codé différentiellement correspond à la réception un échantillon reçu représenté dans le plan complexe par une composante réelle obtenue par échantillonnage du premier signal reçu lors d'un premier intervalle de temps correspondant à la transmission du symbole par l'émetteur et une composante imaginaire obtenue par échantillonnage du second signal reçu au même premier intervalle de temps. De même, à un symbole transmis véhiculé par le second signal codé différentiellement correspond à la réception un symbole reçu représenté dans le plan complexe par une composante imaginaire obtenue par échantillonnage du second signal reçu lors d'un second intervalle de temps correspondant à la transmission du symbole par l'émetteur et une composante réelle obtenue par échantillonnage du premier signal reçu au même second intervalle de temps.

D'une analyse mathématique à partir du modèle théorique du système de transmission selon l'invention sont déduits la structure optimale d'un filtre de réception inclus dans un récepteur du système pour produire un signal duquel est éliminée l'interférence entre symboles, ainsi qu'une loi de détection différentielle optimale que doit réaliser un circuit de décision inclus également dans ledit récepteur afin de prendre des décisions concernant des valeurs de symboles transmis par un émetteur du système, et cela avec une probabilité minimale d'erreur.

En référence à la Fig. 1, le système de transmission selon l'invention comprend un émetteur MSK, 1 et un récepteur MSK à démodulation différentielle cohérente 2. L'émetteur 1 et le récepteur 2 sont reliés par un support de transmission 3.

L'émetteur 1 est constitué d'un codeur différentiel 11 et d'un filtre d'émission 12.

Le codeur différentiel 11 reçoit en entrée un message à transmettre Me composé d'une suite de K symboles $\alpha_0$ à $\alpha_{K-1}$, où K est un entier, mutuellement indépendants et prenant chacun l'une des valeurs équiprobables 1, -1. En sortie, le codeur 11 délivre une suite de K symboles complexes $a_0$ à $a_{K-1}$ en réponse à l'entrée des symboles $\alpha_0$ à $\alpha_{K-1}$, respectivement. Le codage réalisé par le codeur 11 étant de type différentiel, les symboles $a_0$ à $a_{K-1}$ sont liés par une fonction de codage différentiel ; cette fonction est exprimée par l'égalité :

3

$a_k = j.\alpha_k . a_{k-M}$ ,     (1)

où k est un indice entier compris entre 0 et K - 1, M est un paramètre entier de préférence impair et supérieur à 1, et j est l'imaginaire de module unité tel que $j^2 = -1$. Les symboles $a_0$ à $a_{K-1}$ prennent alternativement des valeurs réelles 1 ou -1 et imaginaires j ou -j. Dans les systèmes de transmission MSK connus, le paramètre M prend généralement la valeur M = 1, c'est-à-dire que la valeur d'un $(k+1)^{ième}$ symbole $a_k$ délivré par le codeur différentiel dépend de la valeur du symbole précédent $a_{k-1}$ délivré par le codeur différentiel. Dans le système selon l'invention, la valeur du $(k+1)^{ième}$ symbole $a_k$ délivré par le codeur 11 dépend de la valeur du $(k+1-M)^{ième}$ symbole $a_{k-M}$ délivré par le codeur 11. La finalité de cette disposition apparaîtra clairement par la suite dans la description. Le codeur 11 mémorise des symboles initiaux $a_{-M}$ à $a_{-1}$. Les symboles $a_{-M}$ à $a_{-1}$ sont déterminés de sorte que les symboles $a_k$ sont égaux à 1 ou -1 lorsque k est un entier pair égal à 2n et égaux à j ou -j lorsque k est un entier impair égal à 2n + 1.

Le filtre d'émission 12 reçoit en entrée les symboles complexes $a_0$ à $a_{K-1}$ à rythme de fréquence 1/T et délivre en sortie un signal MSK en bande de base $s_b(t)$. L'enveloppe complexe $s_b(t)$ du signal MSK est exprimée par l'égalité :

$$s_b(t) = (2E_b)^{1/2} \sum_{k=0}^{k=K-1} a_k . h(t-kT), \qquad (2)$$

où $E_b$ est l'énergie du signal pendant un intervalle de temps de durée T, et h(t) est la réponse impulsionnelle du filtre 12 donnée par les égalités :

h(t) = $(T)^{-1/2} . \sin((\pi/2T).t)$ pour t $\epsilon$ [0,2T ]

et

$$h(t) = 0, \text{ pour } t \notin [0,2T].$$

Le récepteur 2 est constitué d'un filtre de réception 21, d'un échantillonneur 22 à la fréquence d'échantillonnage 1/T, et d'un circuit de décision 23.

Le filtre de réception 21 reçoit en entrée un signal MSK en bande de base $z_b(t)$ correspondant au signal transmis $s_b(t)$ :

$z_b(t) = s_b(t).\exp(j\theta) + n(t)$,     (3)

où $\exp(j\theta)$ et n(t) représentent respectivement un déphasage et un bruit gaussien complexe introduit par la transmission du signal $s_b(t)$ à travers le support de transmission 3. En sortie, le filtre 21 fournit un signal y(t) exprimé par le produit de convolution :

$$y(t) = \int_{-\infty}^{+\infty} z(\tau).g(\tau-t).d\tau, \qquad (4)$$

où g(-t) représente la réponse impulsionnelle du filtre de réception 21 et $\tau$ une variable temporelle.

Le signal y(t) est échantillonné par l'échantillonneur 22 à la fréquence 1/T. Aux instants d'échantillonnage kT, l'échantillonneur 22 fournit des échantillons y(kT) du signal y(t), notés également $y_k$. Des égalités (2), (3) et (4), il découle qu'un échantillon $y_k$ est déterminé par l'égalité :

$$y_k = (2E_b)^{1/2} \cdot \exp(j\theta) \cdot \sum_{m = 0}^{m = K-1} a_m \cdot \int_{-\infty}^{+\infty} h(t-mT) \cdot g(t-kT) \cdot dt + V_k, \qquad (5)$$

où $m$ est un indice entier et $V_k$ un bruit dû à l'intégration du bruit $n(t)$.

Dans le système selon l'invention, les échantillons $y_k$ doivent être affranchis de l'interférence entre symboles afin de réduire la probabilité d'erreur de décision. Un échantillon $y_k$ ne doit donc dépendre que du symbole $a_{m = k}$ à l'exclusion de tout autre symbole $a_{m \neq k}$ ; cette condition n'est réalisée que si l'intégrale :

$$\int_{-\infty}^{+\infty} h(t-mT) \cdot g(t-kT) \cdot dt$$

est nulle pour tout $m \neq k$ ; ce qui revient à satisfaire à la condition de Nyquist :

$$\int_{-\infty}^{+\infty} h(t) \cdot g(t-kT) \cdot dt = \delta_{0,k} \qquad (6)$$

où $\delta_{0,k}$ représente le symbole de Kronecker égal à 1 pour $k = 0$ et égal à 0 pour $k \neq 0$.

L'échantillon $y_k$ est alors exprimé par l'égalité :

$$y_k = (2E_b)^{1/2} \cdot \exp(j\theta) \cdot a_k + V_k . \qquad (7)$$

Afin de préserver l'optimalité du filtre 21, la fonction $h(t)$ doit nécessairement être décomposable en une somme de fonctions $g(t-qT)$. L'égalité suivante doit être vérifiée :

$$h(t) = \sum_{q = -Q}^{q = Q} p_q \cdot g(t-qT), \qquad (8)$$

où les coefficients $p_q$ sont des coefficients réels associés respectivement aux fonctions $g(t-qT)$ et l'indice $q$ est entier et prend des valeurs positives et négatives entre $-Q$ et $Q$. Dans le plan complexe des transformées de Fourier, l'égalité (8) devient :

$$H(f) = G(f) \cdot \sum_{q} p_q \cdot \exp(-j2\pi fqT)$$

où $H(f)$ et $G(f)$ sont respectivement les transformées de Fourier des fonctions $h(t)$ et $g(t)$. De cette dernière égalité est déduite l'expression de la fonction de transfert $G^*(f)$ du filtre de réception 21, fonction de transfert qui est la transformée de Fourier de la fonction $g(-t)$. L'expression :

$$1/\sum_{q} p_q \cdot \exp(-j2\pi fqT)$$

étant réelle, la fonction G*(f) est déterminée par l'égalité :

$$G^*(f) = H^*(f)/\sum_q p_q \cdot \exp(-j2\pi fqT) \qquad (9)$$

où le symbole * indique le complexe conjugué correspondant.

De l'expression (9) découle la structure du filtre de réception 21 qui est composé d'un filtre classique 211 adapté à la forme d'onde de la réponse impulsionnelle h(t) et ayant une fonction de transfert H*(f) qui est le complexe conjugué de la fonction de transfert H(f) du filtre d'émission 12, et d'un égaliseur 212 ayant une fonction de transfert $E_r(f)$ approximant la fonction de transfert théorique :

$$E(f) = 1/\sum_q p_q \cdot \exp(-j2\pi fqT)$$

Les coefficients $p_q$ sont calculés à partir de l'expression :

$$p_q = \int_{-\infty}^{+\infty} h(t) \cdot h(t-qT) \cdot dt.$$

Cette expression est déduite de l'égalité (8) par calcul du produit de convolution de part et d'autre de l'égalité (8) et par application de la condition de Nyquist (6). Le calcul des coefficients $p_q$ pour l'expression de h(t) donnée postérieurement à l'égalité (2), donne :

$$p_{-1} = 1/\pi$$
$$p_0 = 1$$
$$p_1 = 1/\pi$$

et

$$\text{et } p_q = 0 \text{ pour } q \notin [-1,0,1]$$

Soit E(z), la transformée en z correspondant à la fonction E(f) :

$$E(z) = 1/(1 + (1/\pi).z^{-1} + (1/\pi).z)$$

La transformée E(z) de la fonction de tranfert E(f) comprend un pôle instable, c'est-à-dire de module supérieur à 1, et n'est donc pas réalisable pratiquement. Néanmoins, la fonction de transfert théorique E(f) est approximée par la fonction de transfert $E_r(f)$ réalisable pratiquement et calculée pour minimiser, en l'absence de bruit, l'erreur quadratique moyenne entre les réponses dues à E(f) et $E_r(f)$. Il peut être démontré que la fonction de transfert $E_r(f)$ satisfait l'expression :

$$E_r(f) = \sum_q c_q \cdot \exp(-j2\pi fqT),$$

dans laquelle les coefficients $c_q$ sont tels que $c_q = c_{-q}$ et satisfont à la relation matricielle :

$$P' = B \times C,$$

6

où P' et C sont des vecteurs ayant respectivement pour composantes les coefficients $p_{-q}$ et $c_q$ et B est une matrice carrée ayant $(2Q+1)^2$ coefficients $b_{ij}$ tels que :

$$b_{ij} = \sum_q p_q \cdot p_{q+i-j} ,$$

i et j représentant respectivement la ligne et la colonne dans la matrice B du coefficient $b_{ij}$ considéré.

L'égaliseur 212 peut être réalisé sous la forme d'un égaliseur analogique à l'aide de circuits de retard constitués de lignes de retard. Il peut également être réalisé sous forme numérique, par exemple à l'aide d'un micro-ordinateur ou d'un circuit numérique. Dans ce dernier cas, il comprend en entrée un échantillonneur suivi d'un convertisseur analogique/numérique. L'échantillonneur 22 du récepteur 2 est alors supprimé et la fonction du circuit de décision 23 peut éventuellement être réalisée par ledit micro-ordinateur. De plus, l'égaliseur 212 et le filtre adapté 211 peuvent être réalisés sous la forme d'un filtre unique 21 numérique ou analogique.

La structure générale de l'égaliseur 212 est montrée à la Fig. 2. Cette structure est classique et découle directement de l'expression de $E_r(f)$. L'égaliseur 212 comprend 2Q circuits de retard $2120_{(-Q+1)}$ à $2120_Q$, $2Q+1$ amplificateurs $2121_{-Q}$ à $2121_Q$, et un sommateur 2122 à $2Q+1$ entrées. Les circuits de retard réalisent chacun un retard de durée égale à T. Le sommateur 2122 délivre en sortie le signal y(t) affranchi de l'interférence entre symboles aux instants d'échantillonnage kT.

Les échantillons $y_k$ bien qu'affranchis de l'interférence entre symboles par le filtre 21 contiennent un bruit $V_k$, comme montré par l'égalité (7). Le bruit $V_k$ est un bruit corrélé ; sa fonction d'autocorrélation est égale à :

$$A(V_k, V_{k-u}) = 2N_0 . q_u,$$

où u est un indice entier, $2N_0$ est la densité spectrale de puissance du bruit n(t) dans la bande de fréquence du signal $s_b(t)$ transmis par l'émetteur 1, et où $q_u$ est le coefficient d'indice u donné par l'égalité :

$$q_u = T \int_{-1/2T}^{1/2T} [ \exp(j2\pi uT)/\sum_q p_q \exp(-j2\pi fqT)] \cdot df. \qquad (10)$$

Le circuit de décision 23 doit être conçu de manière à maximiser l'expression :

$$\exp [- (2E_b/N_0) \cdot (q_0 - q_M . Re[a^i_k . a^{i*}_{k-M}])/(q^2_0 - q^2_M)] \cdot I_0 [2(2E_b)^{1/2} \cdot | Y^{*t} . R^{-1}_v . A_l |] \qquad (11)$$

où Re[.] est la composante réelle du produit complexe entre crochets, $a^i_k$ et $a^{i*}_{k-M}$ étant respectivement les symboles complexes susceptibles d'être émis, où $I_0[.]$ est la fonction de Bessel modifiée d'ordre zéro, et $[Y^{*t} . R^{-1}_v . A_l]$ est le module du scalaire $Y^{*t} . R^{-1}_v . A_l$, Y et $A_l$ étant des vecteurs respectivement de coordonnées $(y_k, y_{k-M})$ et $(a^i_k, (a^i_{k-M})$, $R^{-1}_v$ étant la matrice inverse à une matrice de corrélation de bruit :

$$R_v = 2N_0 \cdot \begin{vmatrix} q_0 & q_M \\ q_M & q_0 \end{vmatrix} ,$$

les coefficients $q_u$ étant déterminés par l'égalité (10), et $Y^{*t}$ étant le vecteur ligne transposé correspondant au vecteur colonne $Y^*$.

Le circuit de décision 23 doit prendre la décision qui maximise l'expression (11). Il est intéressant afin de simplifier l'expression (11) que M soit impair. Le produit $a^i_k . a^{i*}_{k-M}$ est alors un imaginaire, compte tenu que les coefficients $a^i_k$ sont alternativement réels et imaginaires. En développant l'expression (11), il vient l'expression de la décision optimale $\widehat{\alpha}_k$ correspondant au symbole $\alpha_k$ :

$$\widehat{\alpha}_k = 1. \text{ signe de } [Im[y_k . y^*_{k-M}]] \qquad (12)$$

Il peut être également démontré que la probabilité d'erreur de décision prise sur un symbole $\alpha_k$ diminue lorsque M croît. Pour M ayant une valeur infinie en pratique supérieure ou égale à 3, la probabilité d'erreur de décision est égale à : $(1/2) \exp(-E_b/N_0.q_0)$. Cette même probabilité d'erreur dans le cas d'un système de transmission équivalent à modulation différentielle binaire à deux états de phase (BPSK) pris comme référence est donné par l'expression connue :

$(1/2) . \exp(-E_b/N_0)$.

Pour une même probabilité d'erreur de décision, un système de transmission selon l'invention doit donc avoir un rapport signal/bruit, égal à $E_b/N_0$, supérieur en dB de 10 log $q_0$ par rapport au rapport signal/bruit requis pour le système de transmission à modulation BPSK. Pour les coefficients $P_0 = 1$, $p_1 = p_{-1} = 1/\pi$, le coefficient $q_0$ est égal à 1,3, d'où :

10 log $q_0$ = 1,13 dB.

Un tel résultat représente une amélioration au moins de 1,5 dB par rapport à l'état de la technique notamment par rapport au système de transmission divulgué par M.K. SIMON et C.C. WANG.

Une première réalisation préférée du système de transmission selon l'invention comprenant un émetteur MSK 1a et un récepteur 2a à filtres de réception en bande de base est montrée à la Fig. 3.

L'émetteur 1a est de type à modulateur linéaire MSK. Il comprend un codeur différentiel 11, et un modulateur linéaire 13.

Le codeur différentiel 11 reçoit en entrée le message à transmettre Me constitué des K symboles $\alpha_0$ à $\alpha_{K-1}$ et délivre les composantes $Re[a_{2n}]$ des symboles réels $a_{2n}$ et les composantes $Im[a_{2n+1}]$ des symboles imaginaires $a_{2n+1}$ respectivement par des première et seconde sorties 111 et 112. Le codeur différentiel 11 est un circuit logique séquentiel facilement réalisable par l'homme du métier à l'aide de portes logiques et de bascules ; sa structure interne n'est donc pas ici décrite en détail.

Le modulateur linéaire MSK 13 comprend 2 filtres d'émission 12r et 12i, deux multiplieurs analogiques 131r et 131i et un sommateur analogique 132.

Les filtres d'émission 12r et 12i sont analogues et ont chacun la réponse impulsionnelle h(t) définie précédemment. Le filtre 12r reçoit en entrée les composantes $Re[a_{2n}] = a_{2n}$ des symboles $a_{2n}$ d'indice pair et délivre en sortie un signal composé d'une suite d'impulsions modulées en amplitude $s_r(t)$. Le filtre 12i reçoit en entrée les composantes $Im[a_{2n+1}] = a_{2n+1}/j$ des symboles $a_{2n+1}$ d'indice impair et délivre en sortie un signal composé d'une suite d'impulsions modulées en amplitude $s_i(t)$.

Le multiplieur 131r reçoit le signal $s_r(t)$ et une porteuse sinusoïdale $\cos(2\pi f_0 t)$ de fréquence $f_0$ respectivement à des première et seconde entrées et délivre en sortie un signal à fréquence porteuse modulé en amplitude $s_r(t).\cos(2\Pi f_0 t)$. Le multiplieur 131i reçoit le signal $s_i(t)$ et une porteuse sinusoïdale $-\sin(2\pi f_0 t)$ de fréquence $f_0$ et déphasée de $-\pi/2$ par rapport à la porteuse $\cos(2\pi f_0 t)$, respectivement à des première et seconde entrées. Le multiplieur 131i délivre en sortie un signal à fréquence porteuse modulé en amplitude $-s_i(t).\sin(2\pi f_0 t)$. Le sommateur 132 reçoit les signaux $s_r(t).\cos(2\pi f_0 t)$ et $-s_i(t).\sin(2\pi f_0 t)$ respectivement à des première et seconde entrées et délivre en sortie un signal MSK à fréquence porteuse $s(t) = s_r(t).\cos(2\pi f_0 t) - s_i(t).\sin(2\pi f_0 t)$. Le signal s(t) est transmis au récepteur 2a à travers la liaison de transmission 3.

Le récepteur 2a comprend un démodulateur 20, deux filtres de réception 21r et 21i, deux échantillonneurs 22r et 22i, et un circuit de décision 23.

Le démodulateur 20 comprend deux multiplieurs analogiques 201r et 201i et un oscillateur local non asservi, non représenté, délivrant deux porteuses sinusoïdales de fréquence nominale $f_0$ et déphasées entre elles de $-\pi/2$, $2 \cos(2\pi f_0 t)$ et $-2 \sin(2\pi f_0 t)$.

Les multiplieurs 201r et 201i sont analogues et reçoivent tous deux à des premières entrées respectives un signal z(t) correspondant au signal s(t) déphasé et bruité par sa transmission à travers la liaison 3. Le multiplieur 201r reçoit la porteuse sinusoïdale de fréquence $f_0$, $2 \cos(2\pi f_0 t)$, à une seconde entrée et délivre en sortie le signal $2 z(t).\cos(2\pi f_0 t)$ constitué d'une somme d'une composante réelle du signal $s_r(t)$, d'une composante réelle du signal $s_i(t)$, et d'autres composantes autour de la fréquence $2f_0$ dans le spectre des fréquences. Le multiplieur 201i reçoit la porteuse sinusoïdale de fréquence $f_0$, $-2 \sin$.-$(2\pi f_0 t)$, à une seconde entrée et délivre en sortie le signal $-2.z(t).\sin(2\pi f_0 t)$ constitué d'une somme d'une composante imaginaire du signal $s_i(t)$, d'une composante imaginaire du signal $s_r(t)$, et d'autres composantes autour de la fréquence $2f_0$ dans le spectre des fréquences.

Les filtres de réception 21r et 21i sont analogues au filtre 21 décrit en référence à la Fig. 1. Ils sont chacun constitués d'un filtre adapté à la forme d'onde de la réponse impulsionnelle h(t) et d'un égaliseur. Le filtre 21r reçoit en entrée le signal $2\,z(t).\cos(2\pi f_0 t)$ et délivre en sortie un signal $y_r(t)$ représentant les composantes réelles des signaux $s_r(t)$ et $s_i(t)$ comprises dans le signal $2.z(t).\cos(2\pi f_0 t)$. Les autres composantes autour de la fréquence $2f_0$ comprises dans le signal $2\,z(t).\cos(2f_0 t)$ sont éliminées par le filtre 21r de type passe-bas. Le filtre 21i reçoit en entrée le signal $-2.z(t).\sin(2\pi f_0 t)$ et délivre en sortie un signal $y_i(t)$ représentant les composantes imaginaires des signaux $s_i(t)$ et $s_r(t)$ comprises dans le signal $-2.z(t).\sin(2\pi f_0 t)$. Les autres composantes autour de la fréquence $2f_0$ comprises dans le signal $-2.z(t).\sin(2f_0 t)$ sont éliminées par le filtre 21i. Les signaux $y_r(t)$ et $y_i(t)$ représentent respectivement les composantes réelle et imaginaire du signal complexe $y(t)$ (Fig. 1) correspondant aux symboles réels $a_{2n}$ et imaginaires $a_{2n+1}$ transmis.

Les échantillonneurs 22r et 22i sont analogues. Ils reçoivent en entrée respectivement les signaux $y_r(t)$ et $y_i(t)$ et délivrent aux instants d'échantillonnage $kT$ des échantillons correspondants $y_{rk}$ et $y_{ik}$. Les échantillons $y_{rk}$ et $y_{ik}$ sont respectivement les composantes réelle et imaginaire d'un échantillon complexe $y_k = y_{rk} + j.y_{ik}$ correspondant à un symbole complexe $a_k$.

Le circuit de décision 23 comprend un circuit de calcul de $\mathrm{Im}[y_k.y^*_{k-M}]$, 231, et un détecteur de signe 232.

Le circuit de calcul de $\mathrm{Im}[y_k.y^*_{k-M}]$, 231, comprend deux circuits de retard 2311r et 2311i, deux multiplieurs analogiques 2312a et 2312b et un sommateur analogique 2313. Le circuit 231 reçoit les échantillons $y_{rk}$ et $y_{ik}$ délivrés par les échantillonneurs 22r et 22i.

L'échantillon $y_{rk}$ est appliqué en entrée du circuit de retard 2311r et à une première entrée du multiplieur 2312a. L'échantillon $y_{ik}$ est appliqué en entrée du circuit de retard 2311i et à une première entrée multiplieur 2312b. Les circuits de retard 2311r et 2311i délivrent en sortie respectivement des échantillons $y_{r(k-M)}$ et $y_{i(k-M)}$. Les échantillons $y_{r(k-M)}$ et $y_{i(k-M)}$ sont respectivement les composantes réelle et imaginaire de l'échantillon complexe $y_{k-M}$ correspondant au symbole complexe $a_{k-M}$. Les multiplieurs 2312a et 2312b délivrent en sortie les produits $y_{rk} . y_{i(k-M)}$ et $y_{ik} . y_{r(k-M)}$ qui sont appliqués respectivement à une entrée inverse − et à une entrée directe + du sommateur 2313. Le sommateur 2313 fournit en sortie la composante imaginaire $\mathrm{Im}[y_k.y^*_{k-M}] = y_{ik}.y_{r(k-M)} - y_{rk}.y_{i(k-M)}$ du produit complexe $y_k . y^*_{k-M}$.

Le détecteur de signe 232 reçoit en entrée la composante imaginaire $\mathrm{Im}[y_k.y^*_{k-M}]$ fournie par le circuit de calcul 231 et délivre en sortie une décision $\hat{\alpha}_k = 1$ lorsque ladite composante est positive et égale à $\hat{\alpha}_k = -1$ lorsqu'elle est négative.

Une seconde réalisation préférée du système de transmission selon l'invention comprend un émetteur analogue à l'émetteur la montré à la Fig. 3 et un récepteur 2b du type récepteur de HILBERT à déphasage de $\pi/2$ ne nécessitant pas d'oscillateur local pour la démodulation du signal reçu $z(t)$.

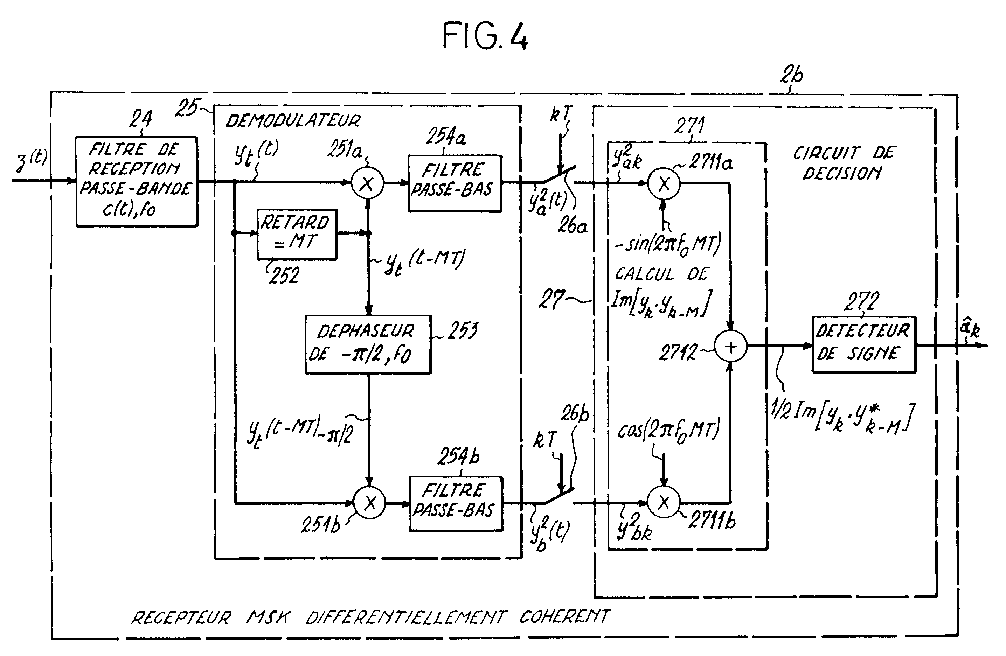

Le récepteur 2b est montré à la Fig. 4. Il comprend un filtre de réception passe-bande 24 ayant pour fréquence centrale égale à la fréquence porteuse $f_0$, un démodulateur 25, et un circuit de décision 27.

Le filtre de réception passe-bande 24 a une réponse impulsionnelle $c(t)$ et est le filtre passe-bande de fréquence centrale $f_0$ correspondant au filtre de réception en bande de base 21r, 22i montré à la Fig. 3. La réponse impulsionnelle $c(t)$ du filtre passe-bande 24 est déduite, comme il est connu, à partir de la réponse impulsionnelle $g(-t)$ du filtre en bande de base 21r, 21i. La réponse impulsionnelle $c(t)$ du filtre 24 est donnée par l'expression :

$$c(t) = 2.\mathrm{Re}[g(-t).\exp(j2\pi f_0 t)].$$

La structure du filtre 24 reste analogue à celle du filtre en bande de base 22r, 22i. Le filtre 24 comprend un filtre passe-bande adapté et un égaliseur.

Le filtre de réception 24 reçoit en entrée le signal $z(t)$ et délivre en sortie un signal $y_t(t)$ :

$$\begin{aligned} y_t(t) &= \mathrm{Re}[y(t).\exp(j2\pi f_0 t)] \\ &= \mathrm{Re}[y(t)].\cos(2\pi f_0 t) + \mathrm{Re}[j.y(t)].\sin(2\pi f_0 t) \\ &= y_r(t).\cos(2\pi f_0 t) - y_i(t).\sin(2\pi f_0 t), \end{aligned}$$

où $y(t)$ est le signal complexe défini précédemment et ayant pour composantes réelle $y_r(t)$ et imaginaire $y_i(t)$, composantes $y_r(t)$ et $y_i(t)$ délivrées respectivement par les filtres en bande de base correspondants 21r et 21i en réponse au signal $z(t)$ démodulé (Fig. 3). Le signal $y_t(t)$ est fourni au démodulateur 25.

9

Le démodulateur 25 comprend deux multiplieurs analogiques 251a et 251b, un circuit de retard 252, un déphaseur de $-\pi/2$, 253, et deux filtres passe-bas 254a et 254b,

Le signal $y_t(t)$ est appliqué en entrée du circuit de retard 252 et à des premières entrées respectivement des multiplieurs 251a et 251b. Le circuit de retard fournit en sortie un signal $y_t(t-MT)$ correspondant au signal $y_t(t)$ retardé d'une durée égale à MT :

$$y_t(t-MT) = y_r(t-MT).\cos(2\pi f_0(t-MT)) - y_i(t-MT).\sin(2\pi f_0(t-MT)).$$

Le signal $y_t(t-MT)$ est appliqué en entrée du déphaseur 253 et à une seconde entrée du multiplieur 251a.

Le déphaseur 253 déphase de $-\pi/2$ la porteuse de fréquence $f_0$ et n altère pas les autres composantes du signal $y_t(t-MT)$ de fréquence différente de $f_0$. Le déphaseur 253 délivre en sortie un signal $y_t(t-MT)_{-\pi/2}$ correspondant au signal $y_t(t-MT)$ déphasé de $-\pi/2$ :

$$y_t(t-MT)_{-\pi/2} = y_r(t-MT) . \sin(2\pi f_0(t-MT)) + y_i(t-MT) . \cos(2\pi f_0(t-MT)).$$

Le déphaseur 253 fournit le signal $y_t(t-MT)_{-\pi/2}$ à une seconde entrée du multiplieur 251b.

Les multiplieurs 251a et 251b délivrent respectivement en sortie les produits :

$$y_t(t).y_t(t-MT) \text{ et } y_t(t).y_t(t-MT)_{-\pi/2}.$$

Les produits $y_t(t).y_t(t-MT)$ et $y_t(t).y_t(t-MT)_{-\pi/2}$ sont appliqués respectivement en entrée des filtres passe-bas 254a et 254b.

Les filtres passe-bas 254a et 254b ont pour fonction d'éliminer des composantes des produits $y_t(t).y_t(t-MT)$ et $y_t(t).y_t(t-MT)_{-\pi/2}$ autour de la fréquence $2f_0$. Les filtres passe-bas 254a et 254b délivrent respectivement des signaux $y^2_a(t)$ et $y^2_b(t)$ correspondant aux produits $y_t(t).y_t(t-MT)$ et $y_t.y_t(t-MT)_{-\pi/2}$ après filtrage passe-bas :

$$y^2_a(t) = (1/2).[y_r(t).y_r(t-MT).\cos(2\pi f_0 MT) + y_r(t).y_i(t-MT).\sin(2\pi f_0 MT) - y_r(t-MT).y_i(t).\sin(2\pi f_0 MT) + y_i(t).y_i(t-MT).\cos(2\pi f_0 MT)], \text{ et}$$
$$y^2_b(t) = (1/2).[y_r(t).y_r(t-MT).\sin(2\pi f_0 MT) - y_r(t).y_i(t-MT).\cos(2\pi f_0 MT) + y_r(t-MT).y_i(t).\cos(2\pi f_0 MT) + y_i(t).y_i(t-MT).\sin(2\pi f_0 MT)]$$

Les signaux $y^2_a(t)$ et $y^2_b(t)$ sont fournis en entrée respectivement des échantillonneurs 26a et 26b qui délivrent en sortie des échantillons $y^2_{ak}$ et $y^2_{bk}$. Les échantillons $y^2_{ak}$ et $y^2_{bk}$ sont fournis au circuit de décision 27.

Le circuit de décision 27 comprend un circuit de calcul de $\text{Im}[y_k.y^*_{k-M}]$, 271 et un détecteur de signe 272.

Le circuit de calcul 271 comprend deux multiplieurs analogiques 2711a et 2711b et un sommateur analogique 2712. Les multiplieurs 2711a et 2711b sont analogues et reçoivent à des premières entrées respectivement les échantillons $y^2_{ak}$ et $y^2_{bk}$. Les multiplieurs 2711a et 2711b reçoivent également à des secondes entrées respectivement des tensions continues d'amplitude $-\sin(2\pi f_0 MT)$ et $\cos(2\pi f_0 MT)$. Le multiplieur 2711a délivre à une première entrée du sommateur 2712 le produit $-y^2_{ak}.\sin(2\pi f_0 MT)$ ; le multiplieur 2711b délivre à une seconde entrée du sommateur 2712 le produit $y^2_{bk}.\cos(2\pi f_0 MT)$. Le sommateur 2712 délivre en sortie la somme des produits $-y^2_{ak}.\sin(2\pi f_0 MT)$ et $y^2_{bk}.\cos(2\pi f_0 MT)$ égale à :

$$(1/2).[y_{ik}.y_{r(k-M)} - y_{rk}.y_{i(k-M)}] = (1/2).\text{Im}[y_k.y^*_{k-M}].$$

Le détecteur de signe 272 est analogue au détecteur de signe 232 montré à la Fig. 3. Il reçoit en entrée le signal $2.\text{Im}[y_k.y^*_{k-M}]$ délivré par le sommateur 2712, détecte son signe et fournit en sortie une décision $\widehat{\alpha}_k = 1$ si le signe détecté est positif est une décision $\widehat{\alpha}_k = 1$ si le signe détécté est négatif.

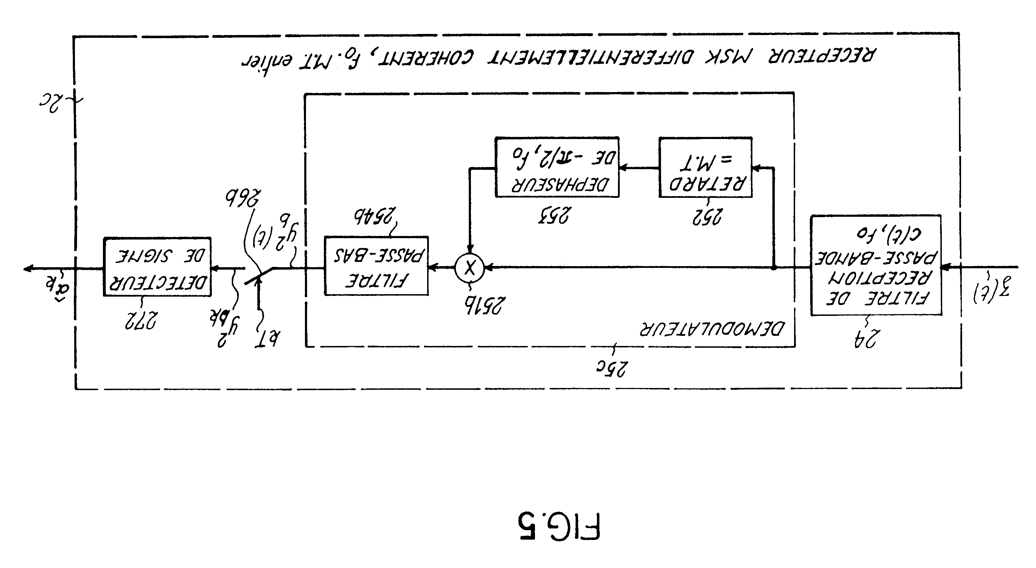

Une troisième réalisation préférée du système de transmission selon l'invention comprend un émetteur analogue à l'émetteur la montré à la Fig. 3, et un récepteur 2c montré à la Fig. 5 et ayant une structure simplifiée par rapport au récepteur 2b montré à la Fig. 4.

De l'expression de $y^2_b(t)$ donnée précédemment, il apparaît qu'il est intéressant pour simplifier la structure du récepteur 2b de choisir la fréquence $f_0$ et la durée M.T de telle manière que le produit $f_0.M.T$ soit un entier. En effet, dans ce cas $\sin(2\pi f_0 MT) = 0$ est $\cos(2\pi f_0 MT) = 1$ et le signal $y^2_b(t)$ est alors égal à $(1/2)[y_i(t).y_r(t-MT)-y_r(t).y_i(t-MT)]$. Le signal $(1/2)\text{Im}[y_k.y^*_{k-M}] = (1/2)[y_{ik}.y_{r(k-M)} - y_{rk}.y_{i(k-M)}]$ peut donc être

obtenu directement par échantillonnage du signal $y^2_b(t)$ aux instants kT. Le récepteur 2c, montré à la Fig. 5, est conçu pour fonctionner dans ce cas de figure où le produit $f_0$.M.T est un entier.

Le récepteur 2c est obtenu en supprimant dans le récepteur 2b tous les circuits destinés à produire le signal $y^2_a(t)$, et le signal $(1/2)\text{Im}[y_k.y^*_{k-M}]$ par combinaison des signaux $y^2_a(t)$ et $y^2_b(t)$.

Le récepteur 2c comprend donc le filtre de réception passe-bande 24, un démodulateur 25c déduit du démodulateur 25 par suppression du multiplieur 251a et du filtre passe-bas 254a, l'échantillonneur 26b et le détecteur de signe 272. Les échantillons $y^2_b(t)$ délivrés par l'échantilloneur 26b sont appliqués directement en entrée du détecteur de signe 272.

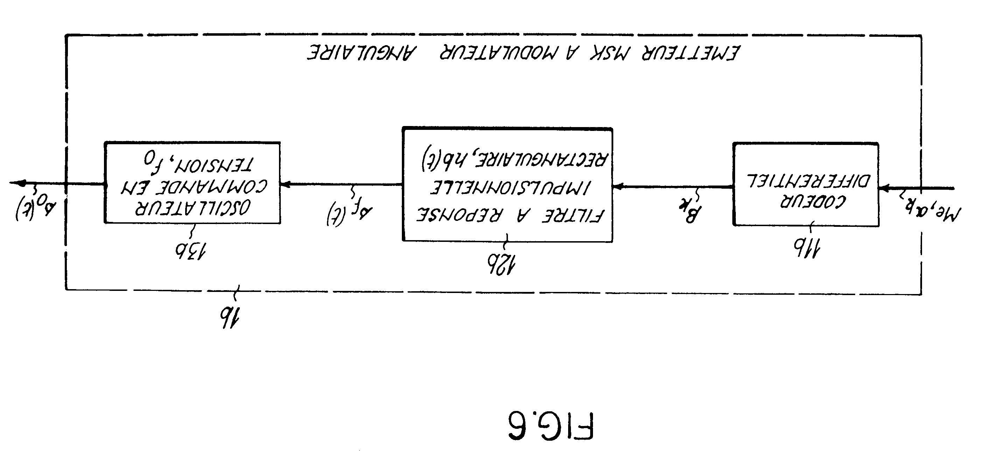

Selon une variante de réalisation du système de transmission selon l'invention, l'émetteur à modulateur MSK linéaire la montré à la Fig. 3 est remplacé par un émetteur à modulateur MSK angulaire 1b montré à la Fig. 6.

L'émetteur à modulateur MSK angulaire 1b est constitué d'un codeur différentiel 11b, d'un filtre 12b ayant une réponse impulsionnelle rectangulaire hb(t) de durée T et d'un oscillateur commandé en tension 13b de fréquence centrale $f_0$, ces trois circuits étant connectés en cascade et dans l'ordre cité.

Le codeur différentiel 11b reçoit en entrée le message à transmettre Me composé des symboles $\alpha_0$ à $\alpha_{K-1}$ et délivre en sortie une suite de symboles codés $\beta_0$ à $\beta_{K-1}$. Les symboles $\beta_0$ à $\beta_{K-1}$ sont délivrés en réponse à l'entrée respectivement des symboles $\alpha_0$ à $\alpha_{K-1}$. Le codeur 11b réalise une fonction de codage différentiel exprimée par l'égalité :

$$\beta_k = (-1)^{(M-1)/2} . \alpha_k . \prod_{i=1}^{i=M-1} \beta_{k-i}$$

Les symboles $\beta_0$ à $\beta_{K-1}$ sont fournis en entrée du filtre 12b et modulent en amplitude des impulsions rectangulaires de durées T délivrées en réponse par le filtre 12b. Ces impulsions rectangulaires modulées constituent un signal composé d'une suite d'impulsions $s_f(t)$ appliqué à une entrée de modulation de l'oscillateur 13b. Le signal $s_f(t)$ module en fréquence avec un indice de modulation m = 0,5 une porteuse de fréquence $f_0$ fournie par l'oscillateur commandé en tension 13b. L'oscillateur délivre un signal $s_0(t)$ modulé en fréquence à indice m = 0,5 équivalent à un signal MSK.

## Revendications

**1.** Système de transmission à modulation à phase continue de type MSK comprenant un équipement émetteur (1) et un équipement récepteur de type différentiellement cohérent (2) reliés à travers un support de transmission, l'équipement émetteur (1) comprenant des moyens pour coder (11 ; 111b, 112b) un message entrant (Me) composé d'une suite ordonnée de K symboles ($\alpha_0$ à $\alpha_{K-1}$) délivrés successivement à une période prédéterminée (T), K étant un entier supérieur à un en une suite codée ordonnée de K symboles codés différentiellement ($a_0$ à $a_{K-1}$, $\beta_0$ à $\beta_{K-1}$) et délivrant un signal à phase continue de type MSK (s(t), $s_0(t)$) modulé par une suite d'impulsions ($s_r(t)$, $s_i(t)$ ; $s_f(t)$) convoyant ladite suite codée ordonnée ($a_0$ à $a_{K-1}$), caractérisé en ce que l'équipement récepteur (2) comprend des moyens égaliseurs de filtrage supplémentaires (21, 21$_r$ et 21$_i$, 24) qui sont en série avec un filtre adapté (211) à la forme d'onde des impulsions (h(t), hb(t)) de ladite suite d'impulsions (s(t), $s_0(t)$), pour éliminer dans des échantillons ($y_k$) d'une suite d'impulsions reçue (y(t)) une interférence entre symboles inhérente audit signal à phase continue de type MSK.

**2.** Système de transmission conforme à la revendication 1, caractérisé en ce que lesdits moyens égaliseurs de filtrage supplémentaires (21, 21$_r$ et 21$_i$,24) sont analogiques (212) ou numériques.

**3.** Système conforme à la revendication 1 ou 2, caractérisé en ce que l'équipement émetteur est du type à modulateur linéaire (1a), et en ce que lesdits moyens pour coder (11) réalisent une fonction de codage différentiel ($a_k = j\alpha_k.a_{k-M}$) telle qu'un symbole codé quelconque ($a_k$) de rang k dans ladite suite codée ($a_0$ à $a_{k-1}$) dépend du produit du symbole codé ($a_{k-M}$) de rang k-M et du symbole ($\alpha_k$) de rang k du message entrant (Me), où k est un entier compris entre 1 et K, et M est un entier prédéterminé impair et supérieur à 1.

**4.** Système conforme à la revendication 1 ou 2, caractérisé en ce que l'équipement émetteur est du type à modulateur angulaire (1b), et en ce que lesdits moyens pour coder (11b) réalisent une fonction de codage différentiel ($\beta_k = (-1)^{(M-1)/2} . \alpha_k . \beta_{k-1} . \beta_{k-2} ... \beta_{k-M+1}$) telle qu'un symbole codé quelconque ($\beta_k$) de rang k dans ladite suite codée ($\beta_0$ à $\beta_{K-1}$) dépend du produit des symboles codés de rang k-1 à k-M + 1 et du symbole ($\alpha_k$) de rang k du message entrant (Me) où k est un entier compris entre 1 et K, et M est un entier supérieur à deux.

**5.** Système de transmission conforme à la revendication 3 ou 4, caractérisé en ce que l'équipement de réception (2) comprend des moyens (23, 25 et 27) pour décider avec une probabilité minimale d'erreur de la valeur (1, -1) d'un $k^{\text{ième}}$ symbole ($\alpha_k$) du message (Me) en fonction de premières et secondes valeurs de premier et second signaux ($y_r(t)$ et $y_i(t)$) composant la suite d'impulsions reçue ($y(t)$) respectivement à des premier et second instants d'échantillonnage (($k-M)T$ et $kT$) de rangs k-M et k correspondant respectivement à la transmission par l'équipement émetteur (1) des $(k-M)^{\text{ième}}$ et $k^{\text{ième}}$ symboles codés ($a_{k-M}$, $a_k$), lesdites premières valeurs des premier et second signaux ($y_r(t)$ et $y_i(t)$) au premier instant d'échantillonnage (($k-M)T$) de rang k-M représentant respectivement des première et seconde composantes ($y_{r(k-M)}$ et $y_{i(k-M)}$) d'un $(k-M)^{\text{ième}}$ symbole codé reçu correspondant au $(k-M)^{\text{ième}}$ symbole ($\alpha_{k-M}$) du message (Me) et lesdites secondes valeurs des premier et second signaux ($y_r(t)$ et $y_i(t)$) au second instant d'échantillonnage ($kT$) de rang k représentant respectivement des première et seconde composantes ($y_{rk}$ et $y_{ik}$) d'un $k^{\text{ième}}$ symbole codé reçu correspondant au $k^{\text{ième}}$ symbole ($\alpha_k$) du message (Me).

**6.** Système de transmission conforme à la revendication 5, caractérisé en ce que lesdits moyens pour décider (23, 25 et 27) comprennent des moyens pour calculer la différence entre le produit de la première composante ($y_{r(k-M)}$) du $(k-M)^{\text{ième}}$ symbole codé reçu et de la seconde composante ($y_{ik}$) du $k^{\text{ième}}$ symbole codé reçu et le produit de la seconde composante ($y_{i(k-M)}$) du $(k-M)^{\text{ième}}$ symbole codé reçu et de la première composante ($y_{rk}$) du $k^{\text{ième}}$ symbole codé reçu, et de moyens pour détecter le signe de ladite différence afin de décider directement à partir de ce signe de la valeur ($\widehat{\alpha_k}$) à attribuer au $k^{\text{ième}}$ symbole ($\alpha_k$) du message (Me).

**7.** Système de transmission conforme à l'une quelconque des revendications 1 à 6, caractérisé en ce que ladite période (T) à laquelle sont délivrés les K symboles du message (Me), l'entier impair M, et une fréquence ($f_0$) d'une porteuse dudit signal à phase continue de type MSK (s(t), $s_0$(t)) sont prédéterminés de telle manière que leur produit ($f_0.M.T$) soit un entier.

## Claims

**1.** MSK type continuous phase modulation transmission system comprising differentially coherent type transmitting equipment (1) and receiving equipment (2) which are connected through a transmission medium, the transmitting equipment (1) comprising means for encoding (11 ; 111b, 112b) an incoming message (Me) comprised of an ordered string of K symbols ($\alpha_0$ to $\alpha_{K-1}$) successively issued at a predetermined period (T), whereby K is an integer greater than 1, into an ordered coded string of K differentially coded symbols ($a_0$ to $a_{K-1}$, $\beta_0$ to $\beta_{K-1}$) and issuing an MSK type continuous phase signal (s(t), $s_0$(t)) modulated by a string of impulses ($s_r(t)$, $s_i(t)$ ; $s_f(t)$) carrying said ordered coded string ($a_{0 \text{ to}}$ $a_{K-1}$), characterized in that the receiving equipment (2) comprises additional filtering equalizer means (21, $21_r$ and $21_i$, 24) which are in cascade with a filter matched (211) to the waveform of the impulses (h(t), hb(t)) of said impulse string (s(t), $s_0$(t)), for suppressing in samples ($y_k$) of a string of received impulses (y(t)) an interference between symbols inherent to said MSK type continuous phase signal.

**2.** Transmission system according to claim 1, characterized in that said additional filtering equalizer means (21, $21_r$ and $21_i$, 24) are analog (212) or digital.

**3.** System according to claim 1 or 2, characterized in that the transmitting equipment is of the linear modulator type (1a), and in that said encoding means (11) carry out a differential coding function ($a_k = j\alpha_k.a_{k-M}$) such that any coded symbol ($a_k$) of rank k in said coded string ($a_0$ to $a_{k-1}$) depends on the product of the coded symbols ($a_{k-M}$) of rank k-M and on the symbol ($\alpha_k$) of rank k in the incoming message (Me), where k is an integer lying between 1 and K, and M is a predetermined integer odd and greater than 1.

4. System according to claim 1 or 2, characterized in that the transmitting equipment is of the type with angle modulator (1b), and in that said encoding means (11b) carry out a differential coding function ($\beta_k$ = $(-1)^{(M-1)/2}.\alpha_k.\beta_{k-1}.\beta_{k-2}...\beta_{k-M+1}$) such that any coded symbol ($\beta_k$) of rank k in said coded string ($\beta_0$ to $\beta_{K-1}$) depends on the product of the coded symbols of rank k-1 to k-M+1 and on the symbol ($\alpha_k$) of rank k of the encoming message (Me), where k is an integer lying between 1 and K, and M is an integer greater than two.

5. Transmission system according to claim 3 or 4, characterized in that the receiving equipment (2) comprises means (23, 25 and 27) for deciding with a minimal probability error of value (1, -1) of a $k^{th}$ symbol ($\alpha_k$) of the message (Me) as a function of first and second values of first and second signals ($y_r(t)$ and $y_i(t)$) constituting the received impulse string (y(t)) respectively at first and second sampling instants ((k-M)T and kT) of ranks k-M and k respectively corresponding to the transmission by the transmitting equipment (1) of (k-M)$^{th}$ and $k^{th}$ coded symbols ($a_{k-M}$, $a_k$), said values of the first and second signals ($y_r(t)$ and $y_i(t)$) at the first sampling instant ((k-M)T) of rank k-M respectively representing first and second components ($y_{r(k-M)}$ and $y_{i(k-M)}$) of a (k-M)$^{th}$ received coded symbol corresponding to the (k-M)$^{th}$ symbol ($\alpha_{k-M}$) of the message (Me) and said second values of the first and second signals ($y_r(t)$ and $y_i(t)$) at the second sampling instant (kT) of rank k respectively representing first and second components ($y_{rk}$ and $y_{ik}$) of a $k^{th}$ received coded symbol corresponding to the $k^{th}$ symbol ($\alpha_k$) of the message (Me).

6. Transmission system according to claim 5, characterized in that said deciding means (23, 25 and 27) comprises means for calculating the difference between the product of the first component ($y_{r(k-M)}$) of the (k-M)$^{th}$ received coded symbol and of the second component ($y_{ik}$) of the $k^{th}$ received coded symbol and the product of the second component ($y_{i(k-M)}$) of the (k-M)$^{th}$ received coded symbol and of the first component ($y_{rk}$) of the $k^{th}$ received coded symbol, and means for detecting the sign of said difference so as to decide directly from this sign the value ($\widehat{\alpha_k}$) to be attributed to the $k^{th}$ symbol ($\alpha_k$) of the message (Me).

7. Transmission system acccording to any one of claims 1 to 6, characterized in that said period (T) at which are issued the K symbols of the message (Me), the odd integer M, and a frequency ($f_0$) of a carrier of said MSK type continuous phase signal (s(t), $s_0$(t)) are predetermined in such a way that their product ($f_0.M.T$) is an integer.

**Patentansprüche**

1. Übertragungssystem nach dem Prinzip der Modulation mit kontinuierlicher Phase vom Typ MSK, welches ein Sendegerät (1) und ein Empfangsgerät differentiell kohärenter Art (2) umfaßt, die durch einen Übertragungskanal miteinander verbunden sind, wobei das Sendegerät (1) Mittel zur Codierung (11; 111b, 112b) einer aus einer geordneten Folge von in einem vorgegebenen Takt (T) hintereinander abgegebenen K Symbolen ($\alpha_0$ bis $\alpha_{K-1}$) bestehenden Eingangsnachricht (Me) in eine geordnete, codierte Folge von K differentiell codierten Symbolen ($\alpha_0$ bis $\alpha_{K-1}$, $\beta_0$ bis $\beta_{K-1}$) umfaßt, wobei K eine ganze Zahl größer als 1 ist, und ein Signal mit kontinuierlicher Phase vom Typ MSK (s(t), $s_0$(t)) abgibt, das durch eine Folge von Impulsen ($s_r$(t), $s_i$(t); $s_f$(t)) moduliert wird, welche die geordnete, codierte Folge ($\alpha_0$ bis $\alpha_{K-1}$) befördern, dadurch gekennzeichnet, daß das Empfangsgerät (2) zusätzliche Entzerr-Filtermittel (21, 21$_r$ und 21$_i$, 24) umfaßt, die mit einem signalangepaßten Filter (211) mit der Wellenform der Impulse (h(t), hb(t)) der Impulsfolge (s(t), $s_0$(t)) in Serie geschaltet sind, mit dem Ziel, aus den Abtastwerten ($y_k$) einer empfangenen Impulsfolge (y(t)) die in dem MSK-Signal mit kontinuierlicher Phase gegebenen Nachbarzeichenstörungen auszuscheiden.

2. Übertragungssystem nach Anspruch 1, dadurch gekennzeichnet, daß die zusätzlichen Entzerr-Filtermittel (21, 21$_r$ und 21$_i$, 24) in analoger oder digitaler Bauweise ausgeführt sind.

3. System nach Anspruch 1 oder 2, dadurch gekennzeichnet, daß das Sendegerät einen linearen Modulator (1a) aufweist und daß die Codiermittel (11) eine Differentialcodierung ($a_k = j\alpha_k.a_{k-M}$) der Art durchführen, daß ein beliebiges codiertes Symbol ($a_k$) vom Rang k in der codierten Folge ($a_0$ bis $a_{K-1}$) vom Produkt aus dem codierten Symbol ($a_{k-M}$) vom Rang k-M und dem Symbol ($\alpha_k$) vom Rang k der Eingangsnachricht (Me) abhängig ist, wobei k eine ganze Zahl zwischen 1 und K, und M eine vorgegebene, ungerade Ganzzahl größer als 1 ist.

4. System nach Anspruch 1 oder 2, dadurch gekennzeichnet, daß das Sendegerät einen Winkelmodulator (1b) aufweist und daß die Codiermittel (11b) eine Differentialcodierung ($\beta_k$ = (-1)-$^{(M-1)/2}.\alpha_k.\beta_{k-1}.\beta_{k-2}...\beta_{k-M+1}$) der Art durchführen, daß ein beliebiges, codiertes Symbol ($\beta_k$) vom Rang k in der codierten Folge ($\beta_0$ bis $\beta_{K-1}$) vom Produkt aus den codierten Symbolen vom Rang k-1 bis k-M+1 und aus dem Symbol ($\alpha_k$) vom Rang k der Eingangsnachricht (Me) abhängig ist, wobei k eine Ganzzahl zwischen 1 und K, und M eine ganze Zahl größer als 2 ist.

5. Übertragungssystem nach Anspruch 3 oder 4, dadurch gekennzeichnet, daß das Empfangsgerät (2) Mittel (23, 25 und 27) umfaßt, um mit einer minimalen Fehlerwahrscheinlichkeit den Wert (1, -1) eines $k^{ten}$ Symbols $\alpha_k$) der Nachricht (Me) zu ermitteln, und zwar aufgrund von ersten und zweiten Werten des ersten und zweiten Signals ($y_r(t)$ und ($y_i(t)$), die die Folge der Impulse ($y(t)$) bilden, die jeweils zu ersten bzw. zweiten Abtastzeitpunkten ((k-M)T und kT) der Ränge k-M und k empfangen werden, welche jeweils der Übertragung des $(k-M)^{ten}$ bzw. $k^{ten}$ codierten Symbols ($a_{k-M}$, $a_k$) entsprechen, wobei die ersten Werte des ersten und zweiten Signals ($y_r(t)$ und ($y_i(t)$) zum ersten Abtastzeitpunkt ((k-M)T) vom Rang k-M jeweils eine erste bzw. zweite Komponente ($y_{r(k-M)}$ bzw. $y_{i(k-M)}$) eines $(k-M)^{ten}$ codierten Empfangssymbols darstellen, das dem $(k-M)^{ten}$ Symbol ($\alpha_{k-M}$) der Nachricht (Me) entspricht und die zweiten Werte des ersten und zweiten Signals ($y_r(t)$ und ($y_i(t)$) zum zweiten Abtastzeitpunkt (kT) vom Rang k jeweils die erste bzw. zweite Komponente ($y_{rk}$ bzw. $y_{ik}$) eines $k^{ten}$ codierten Empfangssymbols darstellen, das dem $k^{ten}$ Symbol ($\alpha_k$) der Nachricht (Me) entspricht.

6. Übertragungssystem nach Anspruch 5, dadurch gekennzeichnet, daß die Entscheidungsmittel (23, 25 und 27) Rechenmittel umfassen, zur Berechnung der Differenz zwischen dem Produkt aus der ersten Komponente ($y_{r(k-M)}$) des $(k-M)^{ten}$ codierten Empfangssymbols und der zweiten Komponente ($y_{ik}$) des $k^{ten}$ codierten Empfangssymbols und dem Produkt aus der zweiten Komponente ($y_{i(k-M)}$) des $(k-M)^{ten}$ codierten Empfangssymbols und der ersten Komponente ($y_{rk}$) des $k^{ten}$ codierten Empfangssymbols, sowie Mittel zur Bestimmung des Vorzeichens dieser Differenz, um in direkter Weise, ausgehend von diesem Vorzeichen, den dem $k^{ten}$ Symbol ($\alpha_k$) der Nachricht (Me) zuzuordnenden Wert ($\alpha\hat{}_k$) zu bestimmen.

7. Übertragungssystem nach einem der Ansprüche 1 bis 6, dadurch gekennzeichnet, daß der Takt (T), in dem die K Symbole der Nachricht (Me) abgegeben werden, die ungerade ganze Zahl M, und eine Frequenz ($f_0$) einer Trägerwelle des MSK-Signals mit kontinuierlicher Phase (s(t), $s_0(t)$) in einer Weise vorgegeben sind, daß ihr Produkt ($f_0$.M.T) eine ganze Zahl ergibt.

# FIG.1

EMETTEUR MSK
1

11 $a_0$ à $a_{K-1}$

Me

$\alpha_0$ à

$\alpha_{K-1}$

CODEUR
DIFFERENTIEL

12

FILTRE
D'EMISSION
$h(t), H(f)$

$b_b(t)$

3

$e^{j\theta}$

$n(t)$

$3_b(t)$

RECEPTEUR MSK DIFFERENTIELLEMENT COHERENT
2

FILTRE DE RECEPTION
$g(-t), G^*(f)$
21

211

FILTRE
ADAPTE
$h(-t), H^*(f)$

212

EGALISEUR
$E_r(f)$

$kT$

$y(t)$

22

$y_k$

23

CIRCUIT
DE
DECISION

$\hat{a}_k$

# FIG.2

EGALISEUR, $E_r(f)$
212

de 211

$2120_{(-Q+1)}$
RETARD = T

$2120_q$
RETARD = T

$2120_Q$
RETARD = T

$y(t)$
vers 22

$c_{-Q}$
$2121_{-Q}$

$c_{-Q+1}$
$2121_{(-Q+1)}$

$c_q$
$2121_q$

$c_Q$
$2121_Q$

2122

SOMMATEUR

EP 0 329 537 B1

# FIG.3

EMETTEUR A MODULATEUR LINEAIRE

$Re$

$Re[a_{2n}]$

FILTRE D'EMISSION $h(t)$

$\delta_r(t)$

$12r$

$\times$ 131r

$\cos(2\pi f_0 t)$

MODULATEUR LINEAIRE MSK

CODEUR DIFFERENTIEL

111

112

11

Me

$132$ $+$

$\delta(t)/\delta(t)$

3

$12i$

FILTRE D'EMISSION $h(t)$

$-\sin(2\pi f_0 t)$

$\times$ 131i

$\delta_i(t)$

$Im[a_{2n+1}]$

13

1a

DEMODULATEUR

20

201r

$\times$

$2\cos(2\pi f_0 t)$

21r

FILTRE DE RECEPTION $g(-t)$

22r

$kT$

$y_r(t)$

23

201i

$\times$

$-2\sin(2\pi f_0 t)$

21i

FILTRE DE RECEPTION $g(-t)$

22i

$kT$

$y_i(t)$

CALCUL DE $Im[y_k \cdot y_{k-M}^*]$ — 231

RETARD $=MT$

2311r

$y_{rk}$

$y_r(k-M)$

2312a

$\times$

2313

$y_i(k-M)$

$+$

$-$

$+$

$\times$

2312b

RETARD $=MT$

2311i

$y_{ik}$

$Im[y_k \cdot y_{k-M}]$

DETECTEUR DE SIGNE

232

$\hat{a}_k$

CIRCUIT DE DECISION

2a

RECEPTEUR MSK DIFFERENTIELLEMENT COHERENT

EP 0 329 537 B1

16

FIG.4

EP 0 329 537 B1

# FIG.5

**25c**

**DEMODULATEUR**

**24**
FILTRE DE
RECEPTION
PASSE-BANDE
$c(t), f_0$

$z(t)$

**251b**
$\times$

**252**
RETARD
$= M.T$

**253**
DEPHASEUR
DE $-\pi/2, f_0$

**254b**
FILTRE
PASSE-BAS

$kT$ $y_{bk}^2$

$y_b^2(t)$

**26b**

**272**
DETECTEUR
DE SIGNE

$\hat{a}_k$

**2c**

RECEPTEUR MSK DIFFERENTIELLEMENT COHERENT, $f_0 . M.T.$ entier

EP 0 329 537 B1

# FIG.6

$Me, \alpha_k$ → **CODEUR DIFFERENTIEL** (11b) → $\beta_k$ → **FILTRE A REPONSE IMPULSIONNELLE RECTANGULAIRE, $hb(t)$** (12b) → $b_f(t)$ → **OSCILLATEUR COMMANDE EN TENSION, $f_0$** (13b) → $b_0(t)$

EMETTEUR MSK A MODULATEUR ANGULAIRE (1b)